# EUROPEAN PATENT SPECIFICATION

(11) **EP 3 706 985 B1**
(45) Date of publication and mention of the grant of the patent: **05.08.2026**
(21) Application number: 18875689.4
(22) Date of filing: 30.10.2018
(51) Int. Cl.: B29C 64/393, B29C 64/264, B29C 64/153, B33Y 50/02, B33Y 10/00, B22F 10/14, B22F 10/28, B22F 10/31, B22F 12/30, B22F 12/90, B33Y 30/00, B23K 26/03, B23K 26/04, B23K 26/0622, B23K 26/082, B23K 26/08, B23K 26/14, B23K 26/144, B23K 26/342, B29C 64/205

(54) **DMLM BUILD PLATFORM AND SURFACE FLATTENING**
DMLM-BAUPLATTFORM UND OBERFLÄCHENABFLACHUNG
PLATEFORME DE CONSTRUCTION DE DMLM ET APLATISSEMENT DE SURFACE

(30) Priority: 08.11.2017 US 201715807434
(43) Date of publication of application: 16.09.2020
(73) Proprietor: General Electric Company, Schenectady, NY 12345 (US)
(72) Inventor: MAMRAK, Justin, West Chester, Ohio 45069 (US); REDDING, MacKenzie Ryan, 96215 Lichtenfels Bavaria (DE); FIELDMAN, Zachary David, West Chester, Ohio 45069 (US)
(74) Representative: Hafner & Kohl PartmbB
(86) International application number: PCT/US2018/058090
(87) International publication number: WO 2019/094222

(56) References cited:
- WO-A1-2015/091813
- CN-A- 106 903 315
- CN-A- 106 925 785
- DE-A1- 102016 218 951
- US-A1- 2017 120 527
- US-A1- 2017 305 137
- US-B2- 9 802 360

## Description

### INTRODUCTION

The present disclosure generally relates to additive manufacturing (AM) apparatuses and methods to perform additive manufacturing processes. More specifically, the present disclosure relates to apparatuses and methods that enable a continuous process of additively manufacturing a large annular object or multiple smaller objects simultaneously, such as but not limited to components of an aircraft engine.

### BACKGROUND

AM processes generally involve the buildup of one or more materials to make a net or near net shape (NNS) object, in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. A particular type of AM process uses an irradiation emission directing device that directs an energy beam, for example, an electron beam or a laser beam, to sinter or melt a powder material, creating a solid three-dimensional object in which particles of the powder material are bonded together. Different material systems, for example, engineering plastics, thermoplastic elastomers, metals, and ceramics are in use. Laser sintering or melting is a notable AM process for rapid fabrication of functional prototypes and tools. Applications include direct manufacturing of complex workpieces, patterns for investment casting, metal molds for injection molding and die casting, and molds and cores for sand casting. Fabrication of prototype objects to enhance communication and testing of concepts during the design cycle are other common usages of AM processes.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758, describe conventional laser sintering techniques. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass and momentum transfer, and chemical reactions that make the process very complex.

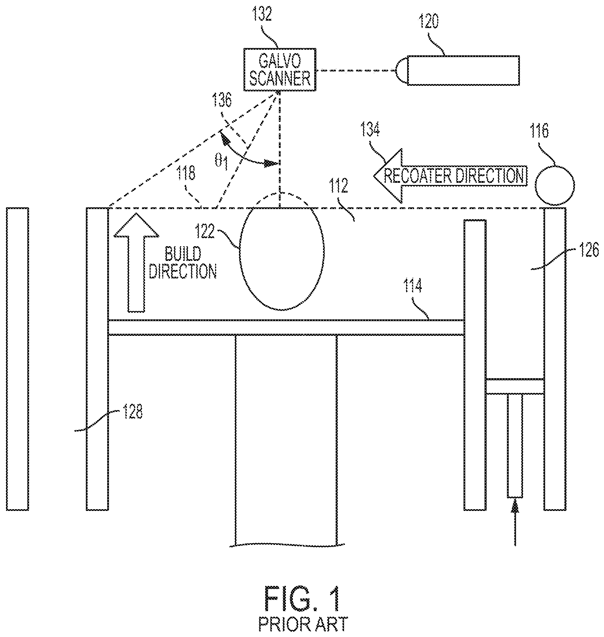

FIG. 1 is a diagram showing a cross-sectional view of an exemplary conventional system 100 for direct metal laser sintering ("DMLS") or direct metal laser melting (DMLM). The apparatus 100 builds objects, for example, the part 122, in a layer-by-layer manner by sintering or melting a powder material (not shown) using an energy beam 136 generated by a source 120, which can be, for example, a laser for producing a laser beam, or a filament that emits electrons when a current flows through it. The powder to be melted by the energy beam is supplied by reservoir 126 and spread evenly over a powder bed 112 using a recoater arm 116 travelling in direction 134 to maintain the powder at a level 118 and remove excess powder material extending above the powder level 118 to waste container 128. The energy beam 136 sinters or melts a cross sectional layer of the object being built under control of an irradiation emission directing device, such as a galvo scanner 132. The galvo scanner 132 may include, for example, a plurality of movable mirrors or scanning lenses. The speed at which the laser is scanned is a critical controllable process parameter, impacting how long the laser power is applied to a particular spot. Typical laser scan speeds are on the order of 10 to 100 millimeters per second. The build platform 114 is lowered and another layer of powder is spread over the powder bed and object being built, followed by successive melting/sintering of the powder by the laser 120. The powder layer is typically, for example, 10 to 100 microns. The process is repeated until the part 122 is completely built up from the melted/sintered powder material.

The laser 120 may be controlled by a computer system including a processor and a memory. The computer system may determine a scan pattern for each layer and control laser 120 to irradiate the powder material according to the scan pattern. After fabrication of the part 122 is complete, various post-processing procedures may be applied to the part 122. Post processing procedures include removal of excess powder by, for example, blowing or vacuuming. Other post processing procedures include a stress release process. Additionally, thermal and chemical post processing procedures can be used to finish the part 122.

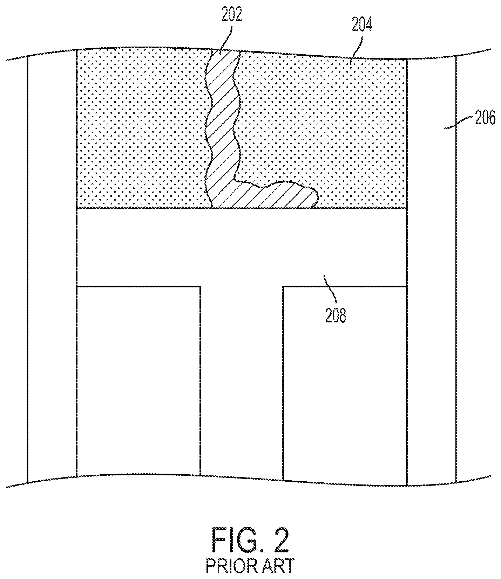

FIG. 2 is a diagram of a conventional powder bed 204. It may be understood by those skilled in the art that the powder bed 204 may be configured, for example, similarly to the powder bed 112 of the conventional apparatus for DMLM as illustrated in FIG. 1. While the other mechanical components of the conventional apparatus are not shown, FIG. 2 shows a build platform 208 on which an object 202 is built. A layer of powder is spread over the powder bed 204 as the object 202 is being built, followed by successive melting/sintering of the powder by the laser 120 (see FIG. 1). The process is repeated until the part (object 202) is completely built up from the melted/sintered powder material.

During the building or growing process, however, some powder bed additively manufactured parts fracture or distort because the powder bed, due to part shrinkage, exerts excessive pressure on the growing part. Powder trapped within a growing part, or between the part and the powder box walls, can exert excessive pressure on the part causing part fractures and distortion. Additionally, powder trapped between the powder chamber floor and grown part limits the ability of the part to shrink as it cools which can result in part fractures and distortion.

DE 10 2016 218 951 A1, which is an intermediate disclosure, discloses a additive manufacturing apparatus and a related additive manufacturing.

US 9 802 360 B2 discloses a platen planarizing process for additive manufacturing system.

Thus, there remains a need to grow large fracture free undistorted parts and manage powder bed loading on parts manufactured in a powder bed.

### SUMMARY

The invention is defined by the subject-matter of the appending claims. The following presents a simplified summary of one or more aspects of the present disclosure in order to provide a basic understanding of such aspects. This summary is not an extensive overview of all contemplated aspects and is intended to neither identify key or critical elements of all aspects nor delineate the scope of any or all aspects. Its purpose is to present some concepts of one or more aspects in a simplified form as a prelude to the more detailed description that is presented later.

The foregoing and/or other aspects of the present invention may be achieved by a method of fabricating an object by additive manufacturing in accordance with claim 1.

The foregoing and/or other aspects of the present invention may be achieved by an additive manufacturing apparatus for building an object in accordance with claim 4.

The foregoing and/or aspects of the present invention may also be achieved by a computer readable storage medium in accordance with claim 7.

Other features and aspects may be apparent from the following detailed description, the drawings, and the claims.

### BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
FIG. 1 is a diagram of a conventional apparatus for DMLM using a powder bed;
FIG. 2 is a diagram of a conventional powder bed box;
FIG. 3 is a diagram of a large scale additive manufacturing apparatus, according to an embodiment of the present invention;
FIG. 4 is a diagram of a side view of a build unit, according to an embodiment of the present invention;
FIG. 5 is a diagram of a side view of a build unit dispensing powder, according to an embodiment of the present invention;
FIG. 6 is a diagram of a perspective view of a build unit, according to an embodiment of the present invention;
FIGS. 7A-7C are diagrams of a build surface, according to an embodiment of the present invention; and
FIG. 8 is a block diagram illustrating an initial build process, according to an embodiment of the present invention.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. For example, the present invention provides a preferred method for additively manufacturing metallic components or objects, and preferably these components or objects are used in the manufacture of jet aircraft engines. In particular, large, annular components of jet aircraft engines can be advantageously produced in accordance with this invention. However, other components of an aircraft and other non-aircraft components may be prepared using the apparatuses and methods described herein.

Exemplary embodiments of the present invention include an apparatus, method, and a system configured to use scanning devices to map platform, surface topology relative to a desired starting build plane. According to an aspect, system software may be provided and uses scan information to establish a build foundation and underlayment needed to establish a build plan with necessary footprint, necessary for initial layers that begin a part build. As such, the present invention may provide an apparatus, method, and system including software for generating a flat build surface integrated into a machine software or system rather than conventional build support or compensation. The software may be configured to automatically generate and append the necessary build strategy and sequence for build surface preparation into the machine build sequence for the part or object.

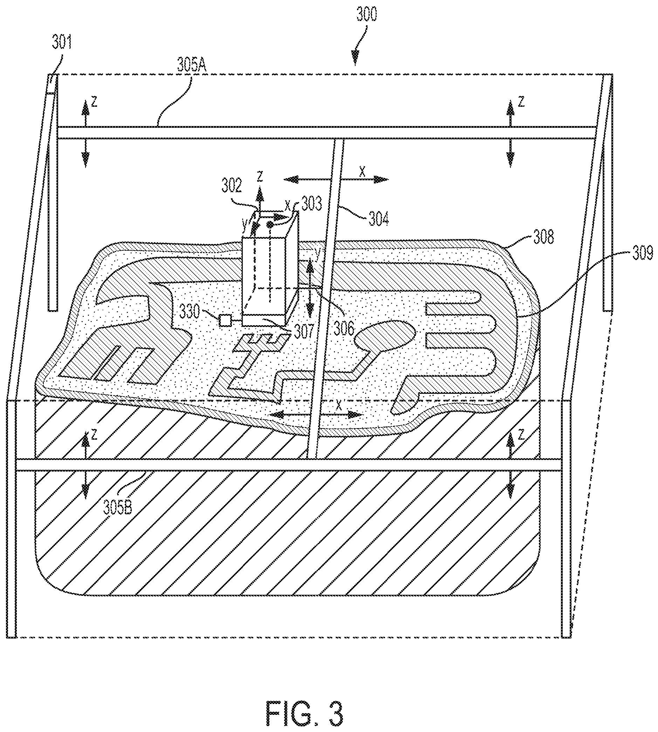

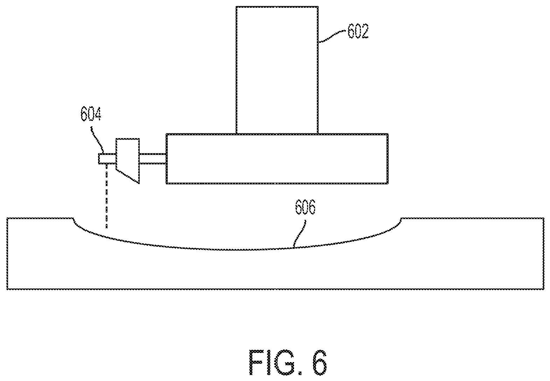

FIG. 3 is a diagram of a large scale additive manufacturing apparatus 300 according to an embodiment of the present invention. In FIG. 3, the apparatus 300 includes a positioning mechanism 301 such as a gantry for example, a build unit 302 including an irradiation emission directing device 303, a laminar gas flow zone 307, and a build plate (not shown) beneath an object being built 309. A maximum build area may be defined by the positioning mechanism 301, instead of by a powder bed as with conventional systems, and the build area for a particular build may be confined to a build envelope 308 that may be dynamically built up along with the object. The positioning mechanism or gantry 301 has an x crossbeam 304 that moves the build unit 302 in the x direction. There may be two z crossbeams 305A and 305B that move the build unit 302 and the x crossbeam 304 in the z direction. The x cross beam 304 and the build unit 302 may be attached by a mechanism 306 that moves the build unit 302 in the y direction. The build unit 302 may include a sensor 330, discussed in detail in FIG. 6 below. The sensor 330 may be shown at a bottom portion of the build unit 302 in FIG. 3 but may be positioned at various other locations on the apparatus 300. While the embodiment in FIG. 3 illustrates a gantry as the positioning mechanism, the present invention is not limited thereto and may utilize other multidimensional positioning systems such as, for example, a delta robot, cable robot, or robot arm. The irradiation emission directing device 303 may be independently moved inside of the build unit 302 by a second positioning system (not shown).

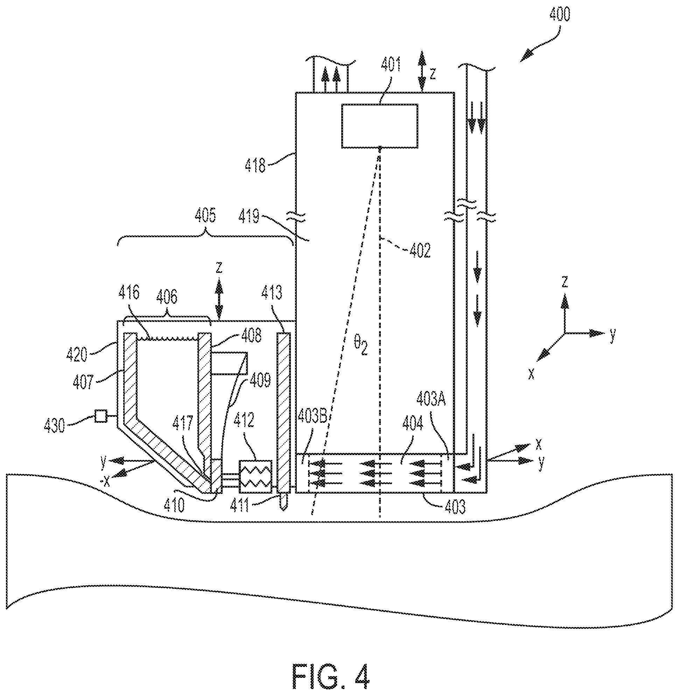

FIG. 4 is a diagram of a side view of a build unit, according to an embodiment of the present invention. FIG. 4 shows a build unit 400 including an irradiation emission directing device 401, a gasflow device 403 with a pressurized outlet portion 403A and a vacuum inlet portion 403B providing gas flow to a gasflow zone 404, and a recoater 405. An enclosure 418 containing an inert environment 419 may be provided above the gasflow zone 404. The recoater 405 may include a hopper 406 having a back plate 407 and a front plate 408. The recoater 405 may also include at least one actuating element 409, at least one gate plate 410, a recoater blade 411, an actuator 412, and a recoater arm 413. The recoater may be mounted to a mounting plate 420. FIG. 4 shows a sensor 430 (discussed in detail in FIG. 6 below) positioned at a side of the mounting plate 420 but the sensor 430 may be positioned at various other locations on the apparatus 400.

FIG. 4 also shows a build envelope 414 that may be built by, for example, additive manufacturing or Mig/Tig welding, an object being formed 415, and powder 416 contained in the hopper 405 used to form the object 415. In this particular embodiment, the actuator 412 may activate the actuating element 409 to pull the gate plate 410 away from the front plate 408. In an alternative embodiment, the actuator 412 may be, for example, a pneumatic actuator, and the actuating element 409 may be a bidirectional valve. In yet another embodiment, the actuator 412 may be, for example, a voice coil, and the actuating element 409 may be a spring. There may also be provided a hopper gap 417 between the front plate 408 and the back plate 407 that allows powder to flow when a corresponding gate plate pulls away from the powder gate by an actuating element. The powder 416, the back plate 407, the front plate 408, and the gate plate 410 may all be the same material. Alternatively, the back plate 407, the front plate 408, and the gate plate 410 may all be the same material, and that material may be one compatible with the powder material such as, for example, cobalt-chrome. In the present exemplary embodiment of the present invention, the gas flow in the gasflow zone 404 flows in the y direction, but is not limited thereto. The recoater blade 411 may have a width in the x direction. The direction of the irradiation emission beam when θ2 is approximately 0 defines the z direction in this view. The gas flow in the gasflow zone 404 may be substantially laminar. The irradiation emission directing device 401 may be independently movable by a second positioning system (not shown). This illustration shows the gate plate 410 in the closed position.

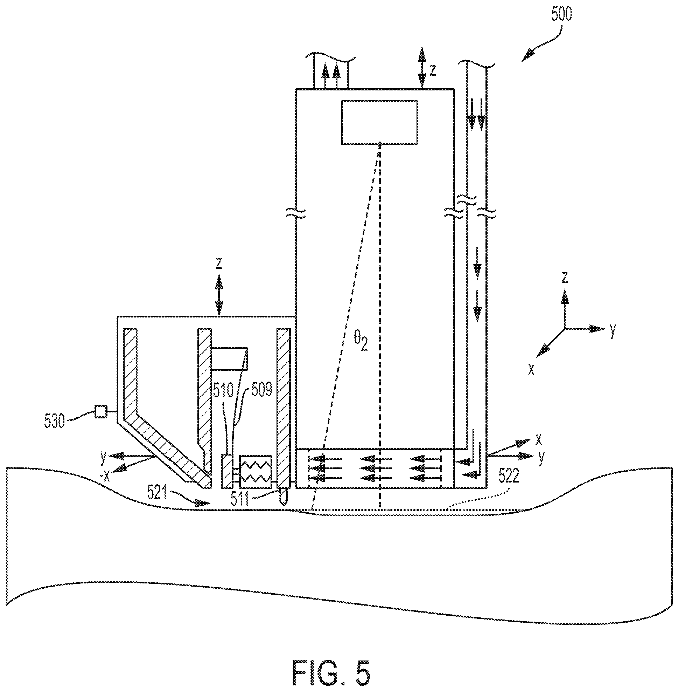

FIG. 5 is a diagram of a side view of a build unit dispensing powder, according to an embodiment of the present invention. FIG. 5 shows the gate plate 410 (of FIG. 4) in the open position (as shown by element 510) and actuating element 509. Powder in the hopper may be deposited to make fresh powder layer 521, which is smoothed over by the recoater blade 511 to make a substantially even powder layer 522. FIG. 5 shows a sensor 530 (discussed in detail in FIG. 6 below) positioned at a side of the hopper but the sensor 530 may be positioned at various other locations on the apparatus 500.

FIG. 6 is a diagram of a perspective view of a build unit 602 according to an embodiment of the present invention. As shown in FIG. 6, the build unit 602 includes a sensor 604 capable of tracing a build surface 606 to be printed on. The sensor 604 may be attached to the building unit 602 as shown in FIG. 6. While not shown in FIG. 6, the build surface 606 may include a plurality of frames. FIG. 6 illustrates a warped surface 606. Initial curvature of a typical build surface, for example, may be inevitable even with grind, when building on the build surface. According to an aspect of the present invention, the build unit 602 may be configured with the sensor 604 to trace the frames and map out high and low locations on the build surface 606. The sensor 604 may be a scanning device similar to, but not limited to, a retractable probe or lidar. Such devices like the lidar, for example, typically provides a surveying method that measures distance to a target by illuminating that target with a pulsed laser light, and measuring the reflected pulses with a sensor. Differences in laser return times and wavelengths, for example, may then be used to make digital 3D-representations of the target.

A controller (not shown) may be provided and include a processor to determine the high and low locations read by the sensor 604. According to an aspect, the building of an object (not shown) may initiate at the lowest location on the build surface 606. That is, the lowest location of the build surface 606 may be printed and recoated first by the build unit 602. A printing and recoating process at the lowest location, for example, may be repeated several times before neighboring frames on the build surface 606 are printed and recoated. The building at the lowest location may be repeated until all of the frames on the build surface 606 are at a first unified layer. Then, the controller may be configured to automatically initiate a full build of the object when the build surface 606 is at the first unified layer.

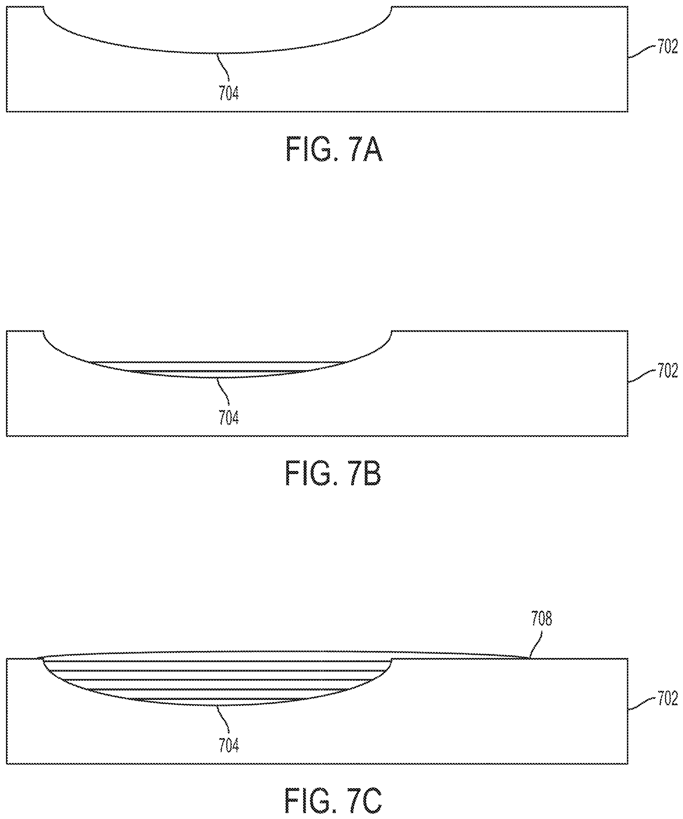

FIGS. 7A-7C are diagrams of perspectives side view of a build surface 702 according to an embodiment of the present invention. FIG. 7A shows the build surface 702 with a slightly low and depressed area 704. According to an aspect, the building may be initiated at depressed area 704. As shown in FIG. 7B, a building unit (not shown) may initiate a printing and recoating at the depressed area 704 by depositing powder 706 in the depressed low area 704 location. FIG. 7C shows the depressed low area 704 built up with layers of powder 706 to a unified layer 708 substantially with the entire surface area of the build surface 702.

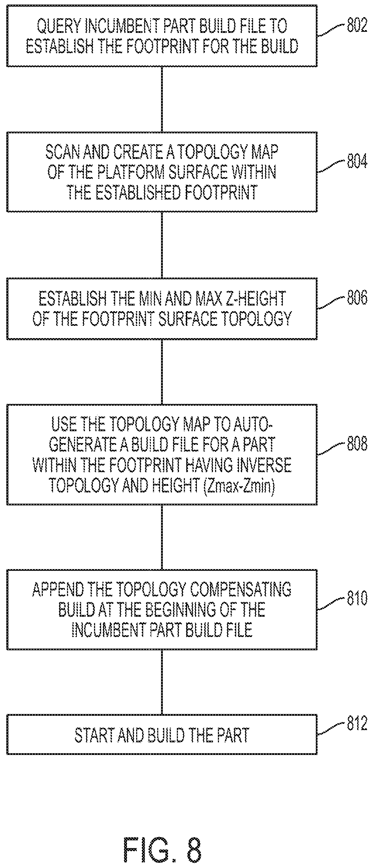

FIG. 8 is a block diagram illustrating an initial build process according to an embodiment of the present invention. At 802, a part build file may be queried to establish a footprint for the build. That is, for example, the controller may query the file to determine the lowest location of the build surface to initiate the build. A sensor may be provided to scan the build surface and create a topology map of the build surface within the established footprint, at 804. It may be appreciated by persons skilled in the art that traditional powder beds that use a recoater arm lack the ability to utilize the topology in the build surface.

According to an aspect, a computer-aided design (CAD) file may be created based on the topology within the established footprint or lowest location. Since a full build of the part or object may start at a unified layer of the build surface, the controller may establish a minimum and maximum Z-height of the footprint surface topology, at 806. By establishing the minimum and maximum Z-height of the footprint surface topology, the topology map may be used to automatically generate a build file for a part within the footprint having inverse topology and height (Zmax-Zmin), at 808. At 810, a topology compensating build, for example, may be appended at the beginning of the incumbent part build file (see 802). In an alternate embodiment, depending on the topology of the build surface, a z-datum build file may be generated along with the topology compensation that provides a reference that establishes where a bottom of the actual part begins. At 812, the part build file may be used to start and build the part.

As described above, the present invention provides, for example, a method, apparatus, and system that may be capable of real-time correction for warped build surfaces. As such, a uniformity at the start of the building of a part or object may be allowed. Additionally, utilizing a scanning device to map out low and depressed areas of a build surface, the present invention may feedback for initial printing. Thus, the time and cost associated with surface grinding plates for a perfect initial build surface may be reduced.

The present invention may be capable of bringing an uneven build platform to a flat level. As well, the present invention may be capable of restoring a build surface, while in the process of building an object, to a flat state.

## Claims

1. A method of fabricating an object by additive manufacturing using an apparatus according to claim 4, the method comprising:
measuring the topography of a build surface (702) and identifying areas that are depressed relative a desired substantially flat surface; and
filling in the depressed areas (704) in order to reduce variations in the topography of the build surface (702), wherein the filling in the depressed areas (704) comprises:
(a) depositing a given layer of powder (706) over a depressed area (704) of the build surface (702);
(b) fusing the given layer of powder (706) at the one depressed area (704) of the build surface (702);
(c) depositing a subsequent layer of powder (706) over a depressed area (704) of
the build surface (702); and
(d) repeating steps (a)-(c) until the filling in of the depressed areas (704) is complete; further comprising
appending a 3D representation of the inverse of the measured topography to a CAD file of the object to produce a custom CAD file, and using the custom CAD file to direct the filling of the depressed areas (704) and the building the object; and
(e) building the object after step (d).

2. The method of claim 1, wherein the measuring is done with a lidar or retractable probe (604).

3. The method of any of claims 1-2, wherein the fusing is conducted using irradiation or binder jetting.

4. An additive manufacturing apparatus for building an object, comprising:
a build unit (602) including at least a powder dispenser, a fusing mechanism, and a recoater;
a multidimensional positioning system (301) for the build unit (602);
a build plate with a build surface (702); and
a measuring unit (604) for measuring the topography of the build surface (702) and identifying areas that are depressed relative a desired substantially flat surface;
a controller adapted to execute the steps of the method of claim 1.

5. The apparatus of claim 4, wherein the fusing mechanism is a binder jet or an irradiation source.

6. The apparatus of claim 4 or claim 5, wherein the measuring unit (604) comprises a lidar or a retractable probe.

7. A computer readable storage medium comprising a computer program comprising instructions to cause the apparatus of claim 4 to execute the steps of the method of claim 1.

## Patentansprüche

1. Verfahren zum Herstellen eines Gegenstands durch additive Fertigung unter Verwendung einer Vorrichtung nach Anspruch 4, wobei das Verfahren umfasst:
Messung der Topographie einer Baufläche (702) und Ermittlung von Bereichen, die relativ zu einer gewünschten im Wesentlichen ebenen Oberfläche depressiv sind; und
Füllung in den depressiven Bereichen (704) zur Verringerung von Schwankungen in der Topographie der Bauoberfläche (702), wobei die Füllung in den depressiven Bereichen (704) Folgendes umfasst:
(a) Abscheiden einer gegebenen Pulverschicht (706) über einen depressiven Bereich (704) des
Baufläche (702);
(b) Verschmelzen der gegebenen Pulverschicht (706) an der einen depressiven Stelle (704) des
Baufläche (702);
(c) Abscheiden einer nachfolgenden Pulverschicht (706) über einen depressiven Bereich (704) von
die Baufläche (702); und
(d) Wiederholen der Schritte (a)-(c) bis das Füllen der depressiven Bereiche (704) vollständig; ferner umfasst
Anfügen einer 3D-Darstellung der Kehrseite der gemessenen Topographie an eine CAD-Datei des Objekts, um eine benutzerdefinierte CAD-Datei zu erstellen, und Verwenden der benutzerdefinierten CAD-Datei, um die Füllung der depressiven Bereiche (704) und das Gebäude des Objekts zu steuern; und
(e) Bauen des Objekts nach Schritt (d).

2. Verfahren nach Anspruch 1, wobei die Messung mit einem Lidar oder einer einziehbaren Sonde (604) erfolgt.

3. Verfahren nach einem der Ansprüche 1-2, wobei die Verschmelzung unter Verwendung von Bestrahlung oder Bindemittelstrahl durchgeführt wird.

4. Eine Vorrichtung zur additiven Fertigung zum Bau eines Objekts, bestehend aus:
eine Baueinheit (602) mit mindestens einem Pulverspender, einem Sicherungsmechanismus und einem Auflackierer;
ein mehrdimensionales Positioniersystem (301) für die Baueinheit (602);
eine Bauplatte mit einer Baufläche (702); und
eine Messeinheit (604) zur Messung der Topographie der Baufläche (702) und zur Identifizierung von Bereichen, die relativ zu einer gewünschten im Wesentlichen ebenen Oberfläche depressiv sind;
einen Controller, der angepasst ist, um die Schritte des Verfahrens nach Anspruch 1 auszuführen.

5. Vorrichtung nach Anspruch 4, wobei der Sicherungsmechanismus ein Bindemittelstrahl oder eine Bestrahlungsquelle ist.

6. Vorrichtung nach Anspruch 4 oder 5, wobei die Messeinheit (604) einen Lidar oder eine einziehbare Sonde umfasst.

7. Computerlesbares Speichermedium, umfassend ein Computerprogramm, umfassend Anweisungen, um die Vorrichtung nach Anspruch 4 dazu zu bringen, die Schritte des Verfahrens nach Anspruch 1 auszuführen.

## Revendications

1. Méthode de fabrication d'un objet par fabrication additive à l'aide d'un appareil selon la revendication 4, la méthode comprenant:
mesurer la topographie d'une surface de construction (702) et identifier les zones déprimées par rapport à une surface sensiblement plane souhaitée; et
remplissage dans les zones déprimées (704) afin de réduire les variations de la topographie de la surface de construction (702), dans laquelle le remplissage dans les zones déprimées (704) comprend:
(a) dépôt d'une couche donnée de poudre (706) sur une zone déprimée (704) de la
surface de construction (702);
(b) fusion de la couche donnée de poudre (706) à la seule zone déprimée (704) de la
surface de construction (702);
(c) dépôt d'une couche ultérieure de poudre (706) sur une zone déprimée (704) de
la surface de construction (702); et
(d) répéter les étapes (a) à (c) jusqu'à ce que le remplissage des zones déprimées (704) soit
complète; comprenant en outre:
l'ajout d'une représentation 3D de l'inverse de la topographie mesurée à un fichier CAO de l'objet pour produire un fichier CAO personnalisé, et l'utilisation du fichier CAO personnalisé pour diriger le remplissage des zones déprimées (704) et le bâtiment de l'objet; et
e) construire l'objet après l'étape d).

2. Méthode de la revendication 1, dans laquelle la mesure est effectuée à l'aide d'un lidar ou d'une sonde rétractable (604).

3. Méthode de l'une des revendications 1-2, dans laquelle la fusion est effectuée par irradiation ou par jet de liant.

4. Un appareil de fabrication additive pour la construction d'un objet, comprenant:
une unité de construction (602) comprenant au moins un distributeur de poudre, un mécanisme de fusion et un revêtement;
un système de positionnement multidimensionnel (301) pour l'unité de construction (602);
une plaque de construction avec une surface de construction (702); et
une unité de mesure (604) pour mesurer la topographie de la surface de construction (702) et identifier les zones déprimées par rapport à une surface sensiblement plane souhaitée;
un contrôleur adapté pour exécuter les étapes de la méthode de revendication 1.

5. Appareil de la revendication 4, dans lequel le mécanisme de fusion est un jet liant ou une source d'irradiation.

6. Appareil de la revendication 4 ou de la revendication 5, dans lequel l'unité de mesure (604) comprend un lidar ou une sonde rétractable.

7. Un support de stockage lisible par ordinateur comprenant un programme d'ordinateur comprenant des instructions pour amener l'appareil de la revendication 4 à exécuter les étapes de la méthode de la revendication 1.
